# EUROPÄISCHE PATENTANMELDUNG

(11) **EP 3 269 602 A1**
(43) Veröffentlichungstag der Anmeldung: **17.01.2018**
(21) Anmeldenummer: 17075006.1
(22) Anmeldetag: 10.03.2017
(51) Int. Cl.: B60R 22/12, D03D 1/00, H05F 3/02, A61N 1/14

(54) **NEUES SICHERHEITSGURTSYSTEM MIT NEUARTIGEN BANDGEWEBEN**

(30) Priorität: 26.04.2016 EP 16000929
(71) Anmelder: Crombeen, Elien, 9260 Serskamp (BE)
(72) Erfinder: Crombeen, Elien, 9260 Serskamp (BE)

(57) **Zusammenfassung**

Sicherheitsgurt bestehend aus einer Bandgewebe, die so hergestellt wird, dass mit allen oder mit einem Teil der Kettfäden eine bestimmte Zahl leitfähiger (Metall)Filamente oder Drähte mitgewebt werden.

Im Fahrzeug oder Flugzeug wird per Sitz einen Stromkreis angelegt, wobei der Sicherheitsgurt ein Signal durchgebven kann zum Bestätigen der Gurtbefestigung über den Gurt unnd dem Gurtschloss. Durch eine akustische oder visuele Signalanlage wird der Fahrer oder der Crew davon informiert, ob alle Passagiere ordnungsgemäss angeschnallt sind oder nicht. Dieser Stromkreis kann von der Masse völlig isoliert sein oder einen Teil davon darstellen.

Weil bewegende Zeuge meistens isoliert vom Boden funktionieren können durch Reibungen elektrostatische Aufladungen entstehen die unangenehme und sogar gefährliche Funken verursachen. Dies ist auch der Fall in diversen Umständen, auch in solchen wenn Funken gelegentlich zu Katastrofen führen. Auch in diesen Fällen können leitfähige Bände zu mehr Sicherheit führen.

## Beschreibung

Die Erfindung beinhaltet dass einen Sicherheitsgurt gemacht wird der den Gebrauch derselben stimuliert und einfacher zu kontrollieren macht. Dies dadurch dass es möglich wird um ein Signal zu schicken an die Anlage die dem Fahrer oder dem Kontrolldienst darüber informiert ob der Gurt ordnungsgemäss benutzt wird oder nicht. Bei Benutzung für andere Zwecke können die neuartigen Bandgewebe die Sicherheit erhöhen.

### I. Gegenwärtiger Zustand.

Die Einsassen eines Fahrzeugs oder eines Flugzeugs (oder irgendwelches bewegendes Zeug) können geschützt werden durch die Benutzung des Sicherheitsgurts. In bestimmten Fällen oder Umständen ist die Benutzung des Gurts verpflichtet.

Die Gurte die benutzt werden sind zusammengebaut aus einer Gurtbefestigung (a), dem eigentlichen Gurtband (b), einem Gurtschlüssel (c) und einem Gurtschloss (d).

Siehe die Illustration/Nomenklatur.

Das Band ist ein Gewebe das zusammengesetzt ist aus einer Anzahl Kettfäden und einem Schussfaden.

Die Bandgewebe die benutzt werden für die meisten Gurte sind hergestellt aus Synthesefasern, z.B. Polyester-Typen die nicht oder fast nicht leitfähig sind. Gelegentlich werden brandsichere Synthesefaser benutzt.
**a.** Um den Fahrer darauf aufmerksam zu machen dass der oder einen Gurt nicht benutzt wird gibt es gegenwärtig ein System das eingebaut wird um ein akustisches oder visuelles Signal zu geben das darauf deutet dass der Gurt nicht benutzt wird.
   Viele Fahrer umgehen die Anschnallpflicht und verhindern das betreffende Signal indem sie einen losen Erzatzschlüssel statt der Gurtschlüssel in das Schloss bringen. So wird kein von ihnen ungewünschtes Signal gegeben.
**b.** Auch Einsassen von z.B. Taxiwagen können die Benutzung des Gurts vernachlässigen ohne dass der Fahrer dies dauernd kontrollieren kann.
**c.** In Flugzeugen wird in Umständen in denen das Anschnallen verpflichtet ist (z.B. beim Start, beim Landen, bei Turbulenzen) dies kontrolliert vom Kabinenpersonal. Dies ergibt jedoch nur eine Momentaufnahme für jeden der vielen Sitze.
**d.** Dieselbe oder gleichartige Bandgewebe werden auch benutzt als Arbeitssicherheitsgurt, z.B. Haltegurt, Abseilgurt, Absturzsicherung, usw.

### II. Ziel der Erfindung.

1. Anpassen des Bandgewebes durch einweben von Inoxfäden
2. Anwendung von solchen leitfähigen Bandgeweben in Sicherheitsgurtsystemen.
3. Gebrauch von solchen leitfähigen Bandgeweben als Problemlösung in brand-und explosionsgefährdeten Umgebungen.

Es handelt sich also um eine total neuartige Kombination von Möglichheiten aus verschiedenen technischen Gebieten die eine sicherheitsfördernde Problemlösung darstellen.

In Punkten (1) und (3) handelt es sich um ein Erzeugnis, in Punkt (2) um eine Vorrichtung.

Die Erfindung ergibt dass einen Gurt gemacht wird der den Gebrauch eines Fake-Schlüssels nutzlos macht und der auch (z.B. in der Luftfahrt) eine zentrale Kontrolle aller Sitze gleichzeitig und dauerhaft ermöglicht.

Um dies zu realisieren wird ein Gurtband hergestellt der ein solches Signal durchgeben kann dass die Gurtbefestigung in der Tat mit dem Gurtschloss verbunden ist. (und dass kein Fake im Spiel ist)

Bei Benutzung in Massenbeförderungsmittel so wie Flugzeuge (aber auch z.B. Busse, Taxiwagen, etc.) kann eventuell von einem zentralen Kontrollposten (z.B. visuell) festgestellt werden ob bei allen besetzten Sitzen der Gurt ordnungsgemass getragen wird.

Derartig hergestellte Bandgewebe können auch benutzt werden als Befestigungsband, Arbeitssicherheitsgurt, usw, das elektro-leitfähig ist und in bestimmten Umständen so wie in der Logistik (z.B.Luftfracht), in explosions-gefährdeten Umgebungen wie Chemie, Raffinerien, usw. die Sicherheit erhöhen kann durch Ableitung der auftretenden statischen Elektrizität. So kann das Entstehen von Stromstossen und Funken vermieden werden.

Siehe später Bemerkung 1.

### III. Realisierung der Erfindung.

Um zu bewirken was die Erfindung beabsichtigt wird das Bandgewebe so hergestellt dass mit allen oder mit einem Teil der Kettfäden eine beschränkte Anzahl leitfähigen Filamente oder Drähte mitgewebt werden.

Siehe später Bemerkung 3.

Dazu geeignet sind Metalldrähte oder Metallfilamente enthaltende Textilfäden oder elektroleitfähige Textildrähte und es wird bevorzugt Inox (Rostfrei Stahl) als Material gewählt.

Diese Wahl weil Inox die Verarbeitung des Bandes während der Produktion problemlos mitmachen kann (z.B. beim Färben obwohl da einige Vorsorge am Platz ist) und auch weil Inox während des späteren Gebrauchs keine Nachteile aufweist. (Oxydiert nicht und stellt keine Produkte frei die die Qualität des Bandes, z.B. Echtheiten, beeinträchtigen könnten).

Siehe später Bemerkung 2.

Um die Kontakte zwischen die eingewebten Drähte und die Metall-Endstücke des Gurtsystems zu sichern und zu verbessern kann ja oder nein (abhängig von Notwendigkeit, Nutzen oder Wunsch) auf die gemeinten Stellen eine elektroleitfähige Beschichtung (Coating) aufgebracht werden. (Diese befindet sich dann zwischen den Inox-Drähten und den Metallteilen des Gurtsystems)

So sind diese Metalldrähte gut eingebettet und bilden eine leitfähige Einheit mit den Metall-Enden des Gurtsystems.

Im Fahrzeug oder Flugzeug wird per Sitz einen Stromkreis angelegt in welchem ein akustisches oder visuelles Signal gehört dass dem Fahrer oder der Cabin Crew darüber informiert ob alle Passagiere ordnungsgemäss angeschnallt sind oder nicht.

Siehe später Bemerkung 4.

### IV. Bemerkungen.

### Bemerkung 1: Von der elektrostatischen Aufladung.

Bewegende Zeuge (Flugzeuge, Automobile,...) funktionieren meistens isoliert vom Boden.

Durch Reibungen zwischen (nicht leitfähige) Materialien entsteht in bestimmten Umständen (z.B. Trockene Luft) elektrostatische Aufladung wobei, sei es bei niedriger Stromstärke, Spannungen bis zu 10.000 Volt entstehen können.

Die Entladung dieser Spannungen verursacht unangenehme Schläge für Personen und in bestimmten Umgebungen sind die entstehende Funken sehr gefährlich. (z.B.beim Lufttransport im Allgemeinen und bei Behandlung von leicht brennbaren Stoffen im Besonderen). Auch in den Chemiearealen und in Raffinerien ist statische Aufladung ausserordentlich gefährlich. Auch kann Feinelektronik durch statische Elektrizität beschädigt werden oder funktionsunsicher werden.

### Bemerkung 2: Von Inox-Garnen

Das Ziehen von Metalldrähte ist genügsam bekannt.

Auch aus rostfreiem Stahl werden solche Drähte gezogen, die von einer Feinheit sind dass sie sich fast als Textilfaser verhalten können. (mit einem Durchmesser bis ca. einige Mikron)

Diese Drähte sind einsetzbar (1) als Schnittfaser einer bestimmten Länge die mit Textilfasern gemischt werden können, oder (2) als endlose (Kontinu) Filamente die zusammen mit echten Textilfasern zu Garnen verarbeitet werden können als 'leitfähiger Faden'.

Es sind vorzugsweise solche Fäden mit endlos-Filamenten die benutzt werden können um die Signale durchzugeben und um (eventuell als Nebeneffekt) die elektrostatische Aufladung abzuleiten (zu verteilen).

Sie sind für dieses Ziel geeignet, betriebssicher, stark, strapazierfähig, verschleissfest, etc. also zuverlässig. (und umweltfreundlicher als chemische Alternative)

### Bemerkung 3: Vom Webtechnik

In Umständen worin es nützlich oder notwendig vorkommt kann den webtechnischen Aufbau vom Band angepasst werden.

In der Illustration/Bandgewebe geben wir z.B. eine Basiseinstellung der Gewebebindung (1/1) und eine Anpassung (1/2).

Es ist deutlich dass ein (Metall-)Faden in Webbindung 2/1 mehr an der Oberfläche erscheint als in Webbindung 1/1 wodurch diese Seite mehr Berühringsoberfläche mit dem Metallfaden aufweist. Diese Seite wird dann benutzt werden um in Kontakt zu treten mit den Metallteilen des Gurtsystems. (z.B. Schwebender Gurtschlüssel)

Diese Anpassung vom Webtechnik kann über die gesammte Länge des Bandes oder nur an bestimmten Stellen durchgeführt werden. (z.B. an diese Stelle wo im Falle eines Dreipunktgurts der schwebende Schlüssel kommt. Eventuell kann da auch noch eine leitfähige Beschichtung hinzugefügt werden)

### Bemerkung 4: Von der Anlage eines Stromkreises und von den Anschlussmöglichkeiten.

Damit das Gurtsystem einsetzbar sein kann soll ein Stromkreis angelegt werden können worin nebst dem Signalteil und dem Stromteil auch der Gurtband anwesend ist.

Dieser Kreis kann von der Masse völlig isoliert sein oder einen Teil davon darstellen.

Im Falle von 2-Punktsgurte (Beckengurte) sind die Anschlussmöglichkeiten einfach. Siehe Illustration/Anschlussbeispiele.

Im Falle von Dreipunktsgurte gibt es zwei feste Befestigungspunkte und eine über das Band schwebende Befestigung (der Gurtschlüssel)

In diesem Falle soll der Kontaktrnöglichkeit des Schlüssels mit den Metallfäden im Bande besonderer Aufmerksamkeit gewidmet werden.

Siehe dazu auch Bemerkung 3 (Von alternativen Webtechniken und fakultativen Beschichtungen)

(Die Art der Anschlüsse, isoliert oder nicht, zwischen den Befestigungen und dem Schloss können umgetauscht werden.)

### V. Illustration.

- Nomenklatur
- Bandgewebe
- Anschlussbeispiele

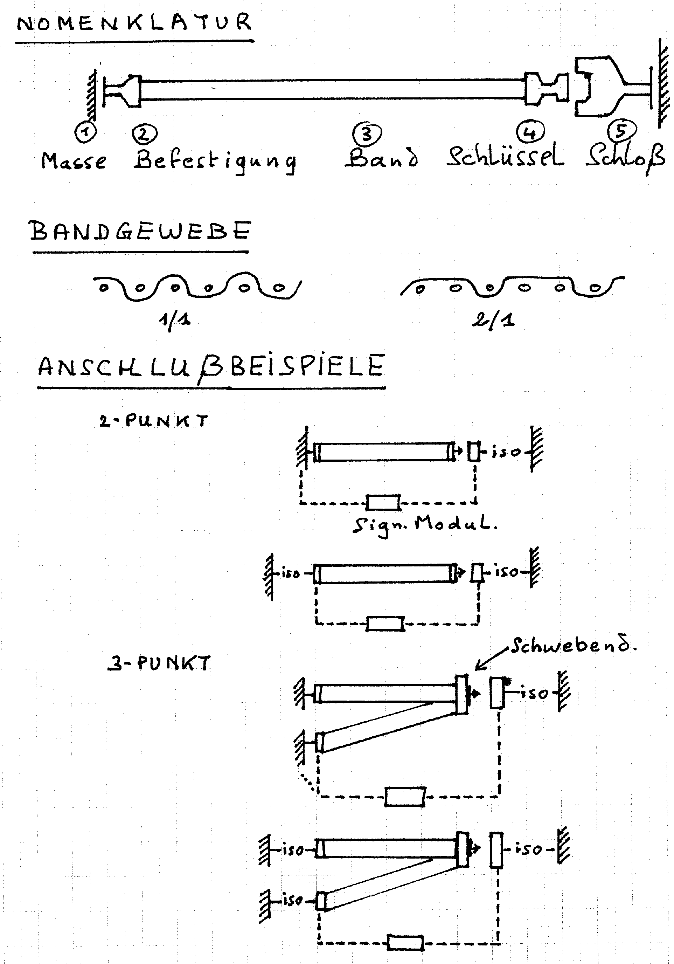

## Patentansprüche

1. Gegenstand des Schutzbegehrens ist dass ein Sicherheitsgurt hergestellt wird als ein gewebtes Band, jedoch worin elektrisch leitfähige Kettfäden eingewebt sind die deshalb Metallfilamente enthalten. Die Beschaffenheit dieser Kettfäden verursacht dass entstehende statische Elektrizität verteilt und abgeleitet wird und sie verursacht gleichfalls dass die Bände elektrischen Strom weiterleiten (durchgeben) können.
Bei Einsatz dieser leitfähigen Bände in Brand- und Explosionsgefährdeten Umgebungen als Befestigung von Personen oder Gütern bietet ihre Benutzung die Sicherheit dass entstehende statische Elektrizität verteilt und abgeleitet wird so dass keine Funken entstehen können.
Diese leitfähige Bände zu benutzen in der Herstellung von Sicherheitsgurtsystemen ist Thema von Anspruch 2.

2. Sicherheitsgurtsysteme unter Verwendung von Bändern nach Anspruch 1
Das Gurtsystem für Sitze ist ähnlich an schon vorhandene Systeme aber hat als wichtiges neuartiges Merkmal, die durch das Einweben von Metallfäden gnügende elektrische Leitfähigkeit der benutzten Bändern wodurch es im Stande ist elektrisch visuelle oder akustische Signalvorrichtungen oder elektrisch angesteuerte Kontrollpanele zu aktivieren. In jedem Sitz soll ein Systemchen vorhanden sein das feststellt ob der Sitz besetzt ist oder nicht und das dafür sorgt dass nur besetzte Sitze vom Gurtsystem beurteilt werden.
Bei Einsatz eines solchen Systems bei der Automobilherstellung wird die Möglichkeit geboten, den späteren Gebrauch eines Fake-Gurtschlüssels (wie in bestimmten Ländern käuflich) nutzlos zu machen. (Das tatsächliche Anschnallen erhöht die Sicherheit im Fahrzeug.)
Bei Einsatz in der Massenbeförderung (gemeint sind Flugzeuge, Autobusse, Taxen, und derartige) bieten solche Anschnallsysteme z.B.dem Fahrer oder einem Begleiter die Möglichkeit um von einer zentralen Stelle zu kontrollieren ob alle Insassen ordnungsgemäss angeschnallt sind in den Umständen wo dies verpflichtet ist. (In diesen Fällen ist die Erfindung nicht nur sicherheitsfördernd sondern sowohl technisch als auch ökonomisch effizienter)
